# EUROPÄISCHE PATENTSCHRIFT

(11) **EP 0 339 469 B1**
(45) Veröffentlichungstag und Bekanntmachung des Hinweises auf die Patenterteilung: **16.08.1995**
(21) Anmeldenummer: 89107048.4
(22) Anmeldetag: 19.04.1989
(51) Int. Cl.: H04Q 3/00, H04M 11/00, H04M 3/42, H04M 7/06

(54) **Verfahren zum Einsatz einer Fernsprechanlage mit zentralem Zeichengabekanal für die Abgabe von Voten**
Method for the utilisation of a telephone exchange with a central signalization channel for the casting of votes
Méthode pour l'utilisation d'un central téléphonique à canal de signalisation centrale pour émettre des votes

(30) Priorität: 26.04.1988 DE 3814064
(43) Veröffentlichungstag der Anmeldung: 02.11.1989
(73) Patentinhaber: SIEMENS AKTIENGESELLSCHAFT, 80333 München (DE)
(72) Erfinder: Beckh, Horst, D-8000 München 60 (DE)

(56) Entgegenhaltungen:
- US-A- 3 950 618
- 2ND INTERNATIONAL SYMPOSIUM ON SUBSCRIBER LOOPS AND SERVICES, Eindhoven, 3.-7. Mai 1976, Seiten 97-101; P. PARKINSON: "Incasting"
- PROCEEDINGS OF THE INTERNATIONAL SWITCHING SYMPOSIUM, Florence, 7. - 11. Mai 1984, session 43B Paper 3, Seiten 1-7; J. VAN WALLE et al.: "Centralized operation, maintenance and call charge recording"
- INTERNATIONAL CONFERENCE ON COMMUMICATIONS, Seattle, Washington, 11. - 13. Juni 1973, Seiten 44-7 - 44-12; P.J. BRENDEL: "Incasting and the telephone network"

## Beschreibung

Die Erfindung betrifft ein Verfahren zum Einsatz einer Fernsprechanlage mit zentralem Zeichengabekanal für die Abgabe von Voten durch Wahl von den jeweiligen Voten entsprechenden Teilnehmernummern einer Zielvermittlungsstelle.

Fernsprechanlagen sind bisher schon in der Weise für die Abgabe von Erfassung von Voten eingesetzt worden, daß Teilnehmernummern einer Zielvermittlungsstelle, die beispielsweise durch Funk oder Fernsehen bekanntgegeben worden waren, zur Votenabgabe gewählt werden konnten. Es wurden dabei die entsprechenden Verbindungen bis zur Zielvermittlungsstelle hin aufgebaut und dort über einen bestimmten Zeitraum hinweg zahlenmäßig erfaßt.

Bei dieser Art von Umfrage erfolgt die Votenabgabe in der Regel während einer relativ kurzen Zeitspanne durch eine Vielzahl von Votierenden gleichzeitig mit der Folge einer enormen Stoßbelastung des Fernsprechnetzes in den einzelnen Verbindungsrichtungen zur Zielvermittlungsstelle hin.

Es ist daher schon vorgeschlagen worden, an den einzelnen Ursprungsvermittlungsstellen jeweils nur einen bestimmten Bruchteil der votierenden Anrufe zu einem Verbindungsaufbau führen zu lassen. Aber auch dann ist immer noch mit einer beträchtlichen Netzbelastung zu rechnen.

Darüberhinaus ist es bekannt (INTERNATIONAL CONFERENCE ON COMMUNICATIONS, Seattle, Washington, 11. - 13. Juni 1973, Seiten 44-7 - 44-12; P.J. BRENDEL:"Incasting and the telephone network"), im Zusammenhang mit der Abgabe von Voten durch Wahl von dem jeweiligen Votum entsprechenden Teilnehmernummern in den Vermittlungsstellen, an die die votierenden Teilnehmer angeschlossen sind, diese Voten zu erfassen. Zur Übermittlung der Ergebnisse solcher Erfassungen werden dann bei dem dort beschriebenen Verfahren Fernsprechverbindungen zwischen den Ursprungsvermittlungsstellen und einer Zielvermittlungsstelle aufgebaut, in der eine Gesamtauswertung erfolgt.

Die Aufgabe der Erfindung besteht darin, ein Verfahren der eingangs genannten Art dahingehend zu verbessern, daß eine Votenabgabe bei noch geringerer Belastung der Fernsprechanlage als dies bisher der Fall war, möglich ist.

Erfindungsgemäß wird diese Aufgabe dadurch gelöst, daß unter Verzicht auf den Aufbau von Fernsprechverbindungen in den Ursprungsvermittlungsstellen lediglich nach Aufnahme der Wahlinformationen als Voten erkannte Verbindungswünsche aufsummiert werden, und daß daraufhin über den zentralen Zeichengabekanal die sich ergebenden Summenwerte an die Zielvermittlungsstelle signalisiert und dort aufaddiert werden.

Aufgrund des erfindungsgemäßen Verfahrens wird also das Sprechwegenetz der Fernsprechanlage überhaupt nicht belastet. Die zusätzliche Belastung des zentralen Zeichengabekanals kann ohne weiteres hingenommen werden. Ein weiterer Vorteil dieses Verfahrens besteht darin, daß in weitaus geringerem Ausmaß als im bekannten Fall Anrufe abgewiesen werden müssen.

Gemäß einer weiteren Ausgestaltung der Erfindung erfolgt die Signalisierung der Summensignale jeweils dann, wenn bei den einzelnen Ursprungsvermittlungsstellen ein vorgegebener Schwellwert erreicht worden ist. Eine Alternative hierzu besteht darin, daß die Signalisierung dann erfolgt, wenn eine bestimmte Zeitspanne nach Beginn der Abstimmung verstrichen ist.

Nachstehend wird das erfindungsgemäße Verfahren anhand eines Ausführungsbeispiels unter Bezugnahme auf eine Zeichnung näher erläutert.

In der Zeichnung zeigen:

FIGUREN 1 und 2 zwei Netzwerksteilkonfigurationen zur Erläuterung des Prinzips des Zentralkanal-Zeichengabesystems.

FIGUR 3 eine Netzwerkskonfiguration einer Fernsprechanlage mit mehreren Vermittlungsstellen, die im Zusammenhang mit einer Votenabgabe Ursprungsvermittlungsstellen und Zielvermittlungsstelle sind.

In einem Fernmeldenetz werden zum Zwecke eines Nachrichtenaustauschs in der Regel zwei Teilnehmerendeinrichtungen über mehrere Leitungsabschnitte und Vermittlungseinrichtungen miteinander verbunden. Insbesondere im Zusammenhang mit dem Verbindungsaufbau ist es erforderlich, die nacheinander zu durchlaufenden Vermittlungsstellen mit Steuerinformationen zu versorgen, die ein Durchschalten der Verbindung bis zur gewünschten Teilnehmereinrichtung sicherstellen. Der Informationsfluß für das Steuern des Verbindungsaufbaues wird als Zeichengabe bezeichnet, wobei man dort noch zwischen drei Arten unterscheidet, nämlich zwischen derjenigen, die zwischen Teilnehmer und seiner Ortsvermittlungsstelle stattfindet (z.B. das Übertragen der Wählinformation), der Zeichengabe innerhalb einer Vermittlungsstelle und der Zeichengabe zwischen den Vermittlungsstellen. Im Zusammenhang mit der letztgenannten Zeichengabe zwischen den Vermittlungsstellen findet bisher der Zeichenaustausch vorwiegend auf dem jeweiligen Sprechkreis statt, weswegen von einer sprechkreisgebundenen Zeichengabe gesprochen wird.

Im Gegensatz hierzu steht die sogenannte Zentralkanalzeichengabe, bei der die Zeichengabe für viele Sprechkreise über einen gemeinsam benutzten Zeichengabekanal abgewickelt wird. Gemäß einer Festlegung des hierfür einschlägigen Zentralkanal-Zeichengabesystems Nr. 7 kann die Zeichengabe von etwa 2500 Verbindungsleitungen über einen zentralen Zeichengabekanal abgewickelt werden.

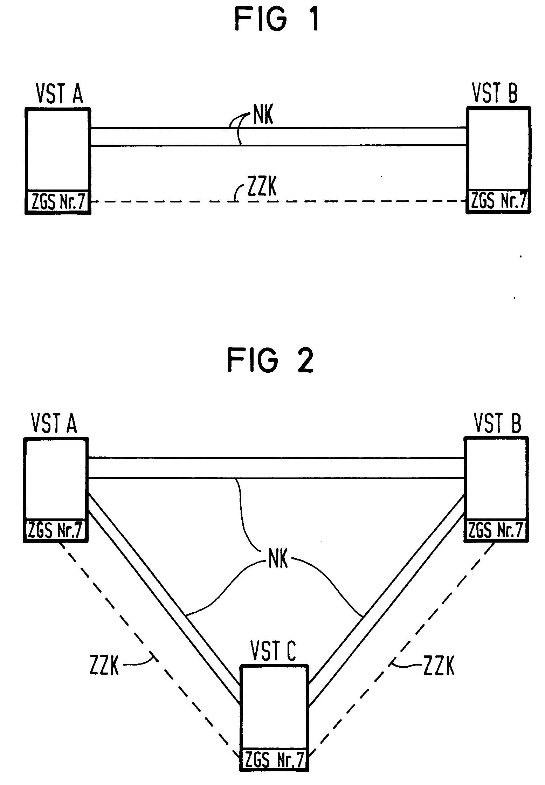

Da zahlreiche Leitungsbündel zwischen den Vermittlungsstellen weit weniger als 2500 Sprechkreise umfassen, ist es nicht wirtschaftlich, parallel zu jedem Bündel einen Zeichengabekanal in Form einer gesonderten Leitung einzurichten. Statt einer solchen auch als assoziierte Betriebsweise bezeichneten Zeichengabe (siehe FIG 1) sieht das genannte Zeichengabesystem daher auch vor, die Zeichen für ein Leitungsbündel zwischen zwei Vermittlungen VSTA und VSTB über eine dritte Vermittlung VSTC zu führen, wodurch die zentralen Zeichengabekanäle zwischen den Vermittlungsstellen VSTA und VSTC bzw. zwischen den Vermittlungsstellen VSTB und VSTC besser ausgelastet werden. Man spricht in diesem Falle von einer quasi-assoziierten Betriebsweise (siehe FIG 2). Sie kommt auch dann in Frage, wenn ein zwischen zwei Vermittlungsstellen eingerichteter zentraler Zeichengabekanal unterbrochen ist.

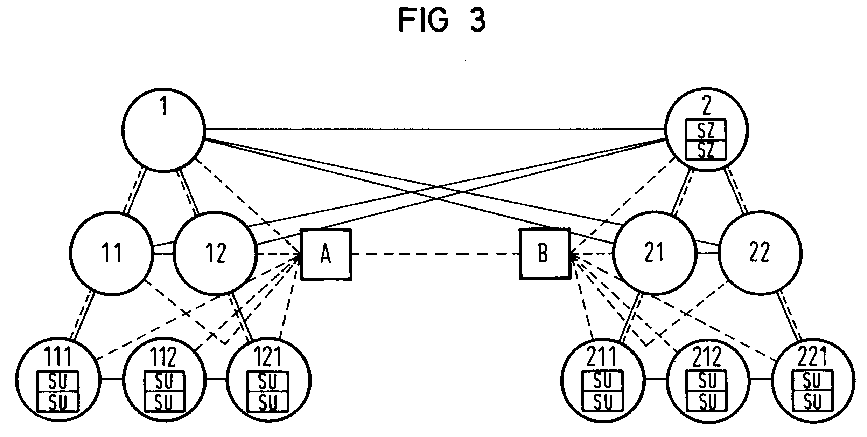

In der FIGUR 3 ist als Beispiel ein hierarchisch gegliedertes Fernsprechnetz mit drei Netzebenen, einem ausgeprägten Kennzahlenweg und einer Vermaschung sowohl durch aufsteigende als auch absteigende Querwege dargetellt. Die Sprechwege dieses Netzes sind als ausgezogene Verbindungen der die einzelnen Vermittlungsstellen darstellenden Kreise angedeutet.

Es ist ferner ein Zeichengabenetz mit gemischter Betriebsweise angenommen d. h. es sind sowohl zwischen einzelnen Vermittlungsstellen parallel verlaufende Nutzkanäle und Zeichengabekanäle vorhanden, z.B. zwischen den Vermittlungsstellen 111, 11 und 1, als auch solche Zeichengabekanäle vorgesehen, die zu keinem Sprechweg parallel verlaufen bzw. es sind einzelne Vermittlungsstellen zeichengabemäßig nur über den Umweg über eine weitere Vermittlungsstelle miteinander verbunden. So sind z.B. die Vermittlungsstellen 111 und 112 zeichengabemäßig über die Vermittlungsstelle 11 verbunden.

Die FIGUR 3 zeigt mit A und B zwei sogenannte Zeichengabetransferpunkte, die durch eine Zeichengabestrecke miteinander verbunden sind. d.h. Punkte, an denen Anwendernachrichten weder erzeugt noch verarbeitet, sondern nur weitergeleitet werden, wenn man von den Nachrichten des Zeichengabenetzmanagements absieht, für die ein Zeichengabetransferpunkt sowohl Quelle als auch Senke sein kann. Diese Zeichengabetransferpunkte sind hier als selbständige Einheiten dargestellt, sie könnten aber auch Bestandteil einer der Vermittlungsstellen sein.

In den Endvermittlungsstellen, die die Ursprungsvermittlungsstellen im Sinne des erfindungsgemäßen Verfahrens in Frage darstellen, sind Summenzähler SU angedeutet. In der Vermittlungsstelle 2, die beim dargestellten Beispiel die Zielvermittlungsstelle im Zusammenhang mit einer erfindungsgemäßen Votenabgabe sein soll, sind außerdem Summenzähler SZ angedeutet.

Wenn nun also durch Wahl bestimmter Teilnehmernummern der Zielvermittlungsstelle 2, von den an die Vermittlungsstellen 111 bis 121 bzw. 211 bis 222 angeschlossenen Teilnehmerendgeräten aus Voten abgegeben werden, dann werden in den einzelnen dieser Ursprungsvermittlungsstellen nach Empfang der Wahlinformation lediglich der Summenzähler SU weitergeschaltet, ohne daß der Aufbau einer Sprechwegverbindung zur Zielvermittlungsstelle hin veranlaßt wird. Der votierende Anrufer erhält einen Ton oder eine Ansage, durch die ihm die Aufnahme seines Votums signalisiert wird.

Entweder wenn die einzelnen Summenzähler SU einen bestimmten Zählerstand erreicht haben oder aber wenn seit Beginn der Abstimmung eine bestimmte Zeit verstrichen ist, werden die Zählerstände dieser Zähler über den betreffenden Zeichengabezentralkanal von der jeweiligen Ursprungsvermittlungsstelle zur Zielvermittlungsstelle signalisiert, wo eine entsprechende Einstellung der dortigen Summenzähler SZ erfolgt, deren endgültige Zählerstände dann das Abstimmungsergebnis darstellen. Eine Belastung des Sprechwegenetzes erfolgt dabei, wie gewünscht, nicht.

## Patentansprüche

1. Verfahren zum Einsatz einer Fernsprechanlage mit zentralem Zeichengabekanal für die Abgabe von Voten durch Wahl von dem jeweiligen Votum entsprechenden Teilnehmernummern einer Zielvermittlungsstelle,
**dadurch gekennzeichnet,**
daß unter Verzicht auf den Aufbau von Fernsprechverbindungen zur Zielvermittlungsstelle hin in den Ursprungsvermittlungsstellen (z.B. 111 bis 122, 211 bis 222) lediglich nach Aufnahme der Wahlinformationen als Voten erkannte Verbindungswünsche aufsummiert werden, und daß daraufhin über den zentralen Zeichengabekanal die sich ergebenden Summenwerte an die Zielvermittlungsstelle signalisiert und dort aufaddiert werden.

2. Verfahren nach Anspruch 1,
**dadurch gekennzeichnet,**
daß die Signalisierung der Summenwerte jeweils erfolgt, wenn ein vorgegebener Schwellenwert erreicht ist.

3. Verfahren nach Anspruch 1,
**dadurch gekennzeichnet,**
daß die Signalisierung jeweils erfolgt, wenn eine bestimmte Zeitspanne nach dem Beginn der Abstimmung verstrichen ist.

## Claims

1. Method for using a telephone system with common signalling channel for registering votes by dialling subscriber numbers of a destination exchange which correspond to the respective vote, characterized in that, dispensing with the setting up of telephone connections to the destination exchange, only the call requests recognized as votes are added together after receiving the dialling information in the originating exchanges (e.g. 111 to 122, 211 to 222), and in that the resultant aggregate values are then signalled via the common signalling channel to the destination exchange and they are added together.

2. Method according to Claim 1, characterized in that the aggregate values are in each case signalled when a predetermined threshold value has been reached.

3. Method according to Claim 1, characterized in that the signalling occurs in each case when a certain period of time has elapsed after the beginning of the voting.

## Revendications

1. Procédé d'utilisation d'une installation téléphonique à canal central de signalisation pour émettre des votes, par composition de numéros d'abonnés d'un central d'arrivée, qui correspondent au vote,
caractérisé en ce qu'il consiste à faire, dans les centraux de départ (par exemple 111 à 122, 211 à 222) les sommes des souhaits de liaison, considérés comme des votes, simplement après réception des informations de numérotation en renonçant à l'établissement de liaisons téléphoniques avec le central d'arrivée et ensuite à communiquer par le canal central de signalisation les sommes obtenues au central d'arrivée et à les y additionner.

2. Procédé selon la revendication 1,
caractérisé en ce que
la communication des valeurs totalisées a lieu quand une valeur prescrite de seuil est atteinte.

3. Procédé selon la revendication 1,
caractérisé en ce que la communication a lieu, quand un laps de temps déterminé s'est écoulé après le début du scrutin.
